# EUROPÄISCHE PATENTSCHRIFT

(11) **EP 1 574 392 B1**
(45) Veröffentlichungstag und Bekanntmachung des Hinweises auf die Patenterteilung: **21.05.2008**
(21) Anmeldenummer: 05005308.1
(22) Anmeldetag: 10.03.2005
(51) Int. Cl.: B60Q 1/26, B60R 1/12

(54) **Seitenblinkleuchte**
Side flashing lamp
Feu latéral clignotant

(30) Priorität: 11.03.2004 DE 102004012052
(43) Veröffentlichungstag der Anmeldung: 14.09.2005
(73) Patentinhaber: FER Fahrzeugelektrik GmbH, 99817 Eisenach (DE)
(72) Erfinder: Bräutigam, Markus, 36433 Immelborn (DE); Matthie, Daniel, 99817 Eisenach (DE); Schwanz, Martina, 99831 Creuzburg (DE); Quendt, Peer, Dr., 99817 Eisenach (DE)
(74) Vertreter: Strasser, Wolfgang

(56) Entgegenhaltungen:
- EP-A- 1 304 260
- EP-A- 1 391 755
- DE-U1- 20 219 483
- US-A1- 2001 010 633

## Beschreibung

Die Erfindung betrifft eine Seitenblinkleuchte für den Einbau in die Abdeckkappe eines Außenrückblickspiegels für Kraftfahrzeuge gemäß dem Oberbegriff von Anspruch 1.

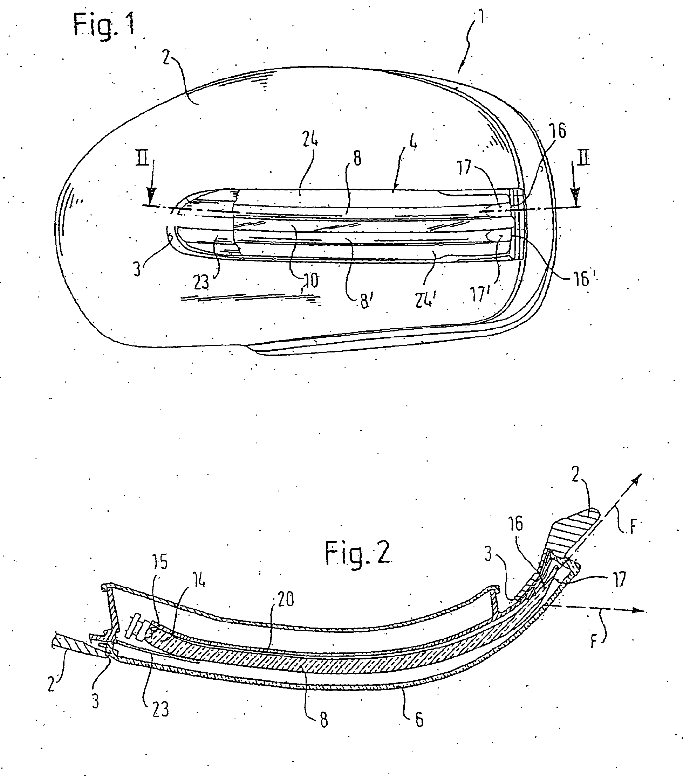

Eine derartige Seitenblinkleuchte ist beispielsweise aus EP 1 195 296 A2 bekannt. Die dort beschriebene Seitenblinkleuchte wird weiter unten unter Bezugnahme auf die Figuren 1 und 2 noch im Einzelnen erläutert.

Ein wesentlicher Aspekt dieser bekannten Seitenblinkleuchte besteht darin, dass sie wenigstens einen stabförmigen Lichtleiter umfasst, der sich im eingebauten Zustand in etwa horizontal von der vom Fahrzeug entfernt liegenden Außenseite der Abdeckkappe ausgehend zum Fahrzeug hin erstreckt. Eine vorzugsweise als Leuchtdiode (LED) ausgebildete Lichtquelle ist so angeordnet, dass ihr Licht in die näher beim Fahrzeug liegende Stirnseite des Lichtleiters eingekoppelt und von diesem auf einem entsprechend der Krümmung der Abdeckkappe des Außenrückblickspiegels gekrümmten Pfad zu seiner gegenüberliegenden Stirnseite weitergeleitet wird, an der das ankommende Licht in einen vom Gesetzgeber vorgeschriebenen Winkelbereich quer zur Fahrtrichtung und schräg nach hinten abgestrahlt wird. Auf dem Weg von der Einkoppel- zum Auskoppel-Strinseite des Lichtleiters werden aufgrund von Streu- und Reflexionseffekten fortlaufend Lichtanteile in etwa senkrecht zur Ausbreitungsrichtung aus dem Lichtleiter ausgekoppelt, so dass diese Lichtanteile für Verkehrsteilnehmer, die das betreffende Fahrzeug entgegen dessen Fahrtrichtung von vorne oder schräg vorne sehen, gut sichtbar sind.

Nachteilig an dieser Anordnung ist, dass als Lichtquelle eine äußerst lichtstarke und damit teure Leuchtdiode verwendet werden muß, damit trotz der bei der Weiterleitung des Lichts im Lichtleiter erfolgenden Auskopplung von Lichtanteilen an seinem Auskoppel-Stirnende genügend Licht ankommt, um die vom Gesetzgeber vorgeschriebenen Helligkeitsanforderungen hinsichtlich der Ausleuchtung des erwähten sich quer zur Fahrtrichtung und schräg nach hinten erstreckenden Winkelbereichs zu erfüllen.

Aus EP-A-1 304 260 ist es zur Lösung dieses Problems bekannt, eine Seitenblinkleuchte gemäß dem Oberbegriff von Anspruch 1 so auszugestalten, dass wenigstens eine erste Lichtquelle ihr Licht durch die vom Fahrzeug entfernt liegende Stirnseite des Lichtleiters so in diesen einkoppelt, dass es in Richtung seiner näher beim Fahrzeug liegenden Stirnseite weiter geleitet wird, und dass wenigstens eine zweite Lichtquelle ihr Licht in einer zur Fahrtrichtung im Wesentlichen quer und schräg nach hinten verlaufenden Richtung abstrahlt

Im Gegensatz zu der aus dem zuvor genannten Stand der Technik bekannten Anordnung wird bei einer solchen Seitenblinkleuchte das Licht der wenigstens einen ersten Lichtquelle in das vom Fahrzeug weiter entfernt liegende Ende des Lichtleiters eingekoppelt, der es zu seinem näher beim Fahrzeug liegenden Stirnende hin weiterleitet. Da für die Intensität bzw. Helligkeit des an diesem Stirnende ankommenden Lichts keinerlei gesetzliche Vorschriften eingehalten werden müssen, kann die wenigstens eine Lichtquelle von einer Leuchtdiode gebildet werden, die eine deutlich geringere Helligkeit besitzt und daher auch erheblich kostengünstiger ist. Um den vom Gesetzgeber vorgeschriebenen Winkelbereich quer zur Fahrtrichtung und nach schräg hinten in der erforderlichen Weise auszuleuchten, ist wenigstens eine zweite Leuchtdiode vorgesehen, deren Helligkeit aber ebenfalls deutlich geringer sein kann.

Obwohl bei dieser Seitenblinkleuchte wenigstens zwei Leuchtdioden verwendet werden, um die gleiche Leuchtfunktion zu erfüllen, die beim zuvor genannten Stand der Technik von einer einzigen Leuchtdiode ausgeübt wird, ist sie doch deutlich kostengünstiger. Auch besitzen die weniger hellen Leuchtdioden eine wesentlich längere Betriebs-Lebensdauer als Leuchtdioden mit besonders hoher Lichtleistung.

Nachteilig an der zuletzt genannten, bekannten Anordnung ist jedoch, dass sie einen sehr komplexen Aufbau besitzt, so dass ihr Zusammenbau mit erheblichen Kosten verbunden ist.

Demgegenüber liegt der Erfindung die Aufgabe zugrunde, eine Seitenblinkleuchte der im Oberbegriff von Anspruch 1 genannten Art so weiterzubilden, dass sie weniger Teile umfasst und somit auf einfache und kostengünstige Weise hergestellt werden kann.

Zur Lösung dieser Aufgabe sieht die Erfindung die im Anspruch 1 niedergelegten Merkmale vor.

Durch die erfindungsgemäße Ausgestaltung des hinter dem wenigstens einen Lichtleiter angeordneten Reflektors erreicht, dass dieses einzige Bauteil eine dreifache Funktion erfüllt, nämlich a) das vom Lichtleiter nach hinten abgestrahlte Licht so zu bündeln und zu reflektieren, dass es in einen erwünschen Raumbereich nach vorne abgestrahlt wird, b) die Position des vom Fahrzeug entfernt liegenden Endes des wenigstens einen Lichtleiters zu definieren und c) ein Abdeckelement zu bilden, das den Innenraumbereich der Seitenblinkleuchte, in welchem sich die Lichtquellen befinden, zur Lichtscheibe hin überdeckt, dass er von außen her nicht unmittelbar eingesehen werden kann. Durch diese Mehrfachfunktion des Reflektors wird erreicht, dass Bauteile, die ansonsten benötigt würden, um das außen liegende Ende des Lichtleiters zu positionieren und den Innenraumbereich der Seitenblinkleuchte abzudecken, in dem sich die Lichtquellen befinden, eingespart wrden können, wodurch sich der Zusammenbau der Seitenblinkleuchte erheblicht vereinfacht und die Herstellungskosten gesenkt werden.

Weitere vorteilhafte Merkmale und Ausgestaltungsmöglichkeiten einer erfindungsgemäßen Seitenblinkleuchte sind in den Unteransprüchen niedergelegt.

Die Erfindung wird im Folgenden anhand eines Ausführungsbeispieles unter Bezugnahme auf die Zeichnung beschrieben: in dieser zeigen:
- Fig. 1: eine schematisierte, perspektivische Rückansicht eines Kraftfahrzeug-Außenrückblickspiegels in seiner Anbauposition auf der Fahrerseite des Fahrzeugs, in den eine der erfindungsgemäßen Seitenblinkleuchte ähnliche, aber dem Stand der Technik gemäß der EP 1 195 296A2 entsprechende Seitenblinkleuchte eingebaut ist,
- Fig. 2: in vergrößertem Maßstab einen horizontalen Teilschnitt durch die Seitenblinkleuchte aus Fig. 1 längs der Linie II-II,
- Fig. 3: in nochmals vergrößertem Maßstab einen dem Schnitt aus Fig. 2 entsprechenden Schnitt durch eine erfindungsgemäße Seitenblinkleuchte und
- Fig. 4: ein weiter vergrößertes Detail aus Fig. 3.

Die Fig. 1 zeigt eine perspektivische, entgegen der Fahrtrichtung gesehene Ansicht eines Außerirückblickspiegels 1 für Kraftfahrzeuge, der eine Abdeckkappe 2 mit einer lang gestreckten, im eingebauten Zustand im wesentlichen horizontal verlaufenden Lichtaustrittsöffnung 3 aufweist, in die von hinten bzw. innen her eine Seitenblinkleuchte 4 eingebaut ist. Die in den Fig. 2, 3 und 4 dargestellte Lichtscheibe 6, welche die Lichtaustrittsöffnung 3 verschließt, ist in Fig. 1 der Deutlichkeit halber weggelassen.

Die Seitenblinkleuchte 4 besitzt eine streifenförmige Struktur, die dadurch zustande kommt, dass in vertikaler Richtung alternierend unterschiedliche, langgestreckte, sich horizontal erstreckende Bereiche vorgesehen sind, die von zwei als Lichtstäben ausgebildeten Lichtleitern 8, 8' und einem dazwischen liegenden, streifenförmigen Bereich 10 gebildet werden.

Wie man Fig. 2 entnimmt, ist an dem in der Figur linken, im eingebauten Zustand näher beim Fahrzeug liegenden Stirnende 14 eines jeden stabförmigen Lichtleiters 8, 8' eine Leuchtdiode 15 so angeordnet, dass das von ihr abgegebene Licht in den zugehörigen stabförmigen Lichtleiter 8, 8' eingekoppelt und von diesem zu seinem gegenüberliegenden Stirnende 16, 16' weitergeleitet wird, wobei allerdings über die Länge des Lichtleiters 8, 8' hinweg ständig Anteile dieses Lichtstoms durch Streu- und Reflexionseffekte quer zur Längsrichtung des Lichtleiters 8, 8' ausgekoppelt werden und durch die Lichtscheibe 6 austreten. An seinem vom Fahrzeug entfernt liegenden Stirnende 16, 16' ist jeder der stabförmigen Lichtleiter 8, 8' mit einer als Auskoppelfläche dienenden Abschrägung 17, 17' versehen, deren Neigung so gewählt ist, dass das durch sie austretende Licht in den gesetzlich vorgeschriebenen Raumwinkelbereich, d. h. im wesentlichen quer zur Fahrtrichtung und schräg nach hinten abgestrahlt wird, wie dies durch die Pfeile F angedeutet ist.

Hinter den stabförmigen Lichtleitern 8, 8' ist eine in vertikaler Richtung durchgehende, bedampfte Reflektorblende 20 angeordnet, um nach hinten austretendes Licht zur Lichtscheibe 6 hin zu reflektieren.

Auf der in den Fig. jeweils linken Seite sind die Enden der stabförmigen Lichtleiter 8, 8' sowie die oberhalb des oberen stabförmigen Lichtleiters 8 und unterhalb des unteren stabförmigen Lichtleiters 8' befindlichen, quer verlaufenden, streifenförmigen Bereiche 24, 24' durch eine bedampfte Abdeckblende 23 überdeckt.

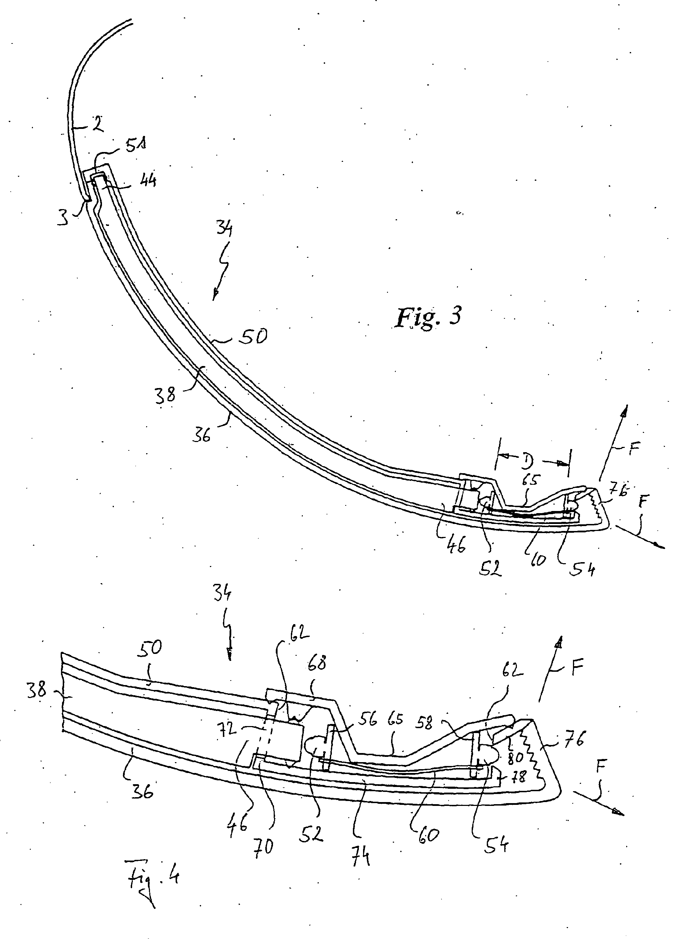

In den Fig. 3 und 4, die eine der eben erläuterten Seitenblinkleuchte 4 ähnliche, erfindungsgemäße Seitenblinkleuchte 34 wiedergeben, sind Teile, die keine wesentlichen Änderungen aufweisen, mit den gleichen Bezugszeichen wie in den Fig. 1 und 2 bezeichnet.

Es sei besonders darauf hingewiesen, dass eine erfindungsgemäße Seitenblinkleuchte 34 wahlweise einen einzigen stabförmigen Lichtleiter 38 oder mehrere, entsprechend der Fig. 1 angeordnete stabförmige Lichtleiter oder einen einzigen (nicht dargestellten) scheibenförmigen Lichtleiter umfassen kann, dessen horizontale Länge dann in etwa gleich der der stabförmigen Lichtleiter ist und der sich in vertikaler Richtung über die gleiche oder eine größere Höhe wie die stabförmigen Lichtleiter erstreckt, so dass dann der in Fig. 1 zwischen den Lichtleitern 8, 8' liegende streifenförmige Bereich 10 wegfällt und durch einen Teil des scheibenförmigen Lichtleiters ersetzt ist. In den Schnittansichten der Fig. 3 und 4 kommt der Unterschied zwischen dem oder den oben beschriebenen stabförmigen Lichtleitern 38 und einem scheibenförmigen Lichtleiter naturgemäß nicht zum Ausdruck.

Wie man der Fig. 3 entnimmt, ist bei der hier gezeigten Seitenblinkleuchte 34 im Gegensatz zu der zuvor erläuterten Seitenblinkleuchte 4 im Bereich der näher beim Fahrzeug liegenden Stirnseite 44 (in Fig. 3 links oben) des Lichtleiters 38 keine Lichtquelle vorgesehen und weist die weiter vom Fahrzeug entfernt liegende Stirnseite 46 keine Abschrägung auf.

Statt dessen ist im Bereich der weiter vom Fahrzeug entfernt liegenden Stirnseite 46 des Lichtleiters 38 eine von einer Leuchtdiode gebildete, erste Lichtquelle 52 so angeordnet, dass das von ihr abgegebene Licht in das Stirnende des Lichtleiters 38 eingekoppelt und von diesem zu seinem gegenüberliegenden Stirnende 44 weitergeleitet wird. Dabei folgt die Lichtausbreitung zwar der Krümmung des Lichtleiters 38, doch werden auf diesem Weg ständig Anteile des sich ausbreitenden Lichts aus dem Lichtleiter 38 entweder unmittelbar nach vorne zur Lichtscheibe 36 hin oder nach hinten auf den Reflektor 50 ausgekoppelt, der sie so reflektiert, dass sie durch den Lichtleiter 38 und die Lichtscheibe 36 hindurch nach außen treten. Somit leuchtet im eingeschalteten Zustand auch bei der erfindungsgemäßen Seitenblinkleuchte 34 die in Fig. 1 in Projektion sichtbare, durch den wenigstens einen Lichtleiter 38 (oder durch mehrere Lichtleiter) hinterlegte Fläche und ist für entgegenkommende Verkehrsteilnehmer deutlich sichtbar.

Wie man der Fig. 3 entnimmt, umgreift eine mit dem Reflektor 50 einstückig ausgebildete Reflektoranordnung 51 das Stirnende 44 des Lichtleiters 38 so, dass sie dort austretendes Licht in den Lichtleiter 38 hinein zurück reflektieren kann, in dem dieses sich dann unter fortschreitender Auskopplung weiterer Anteile wieder zum gegenüberliegenden Stirnende 46 hin ausbreitet.

Das aufgrund gesetzlicher Vorschriften in den durch die Pfeile F angedeuteten Winkelbereich abzustrahlende Licht wird von wenigstens einer zweiten Lichtquelle 54 abgegeben, die ebenfalls von einer Leuchtdiode gebildet wird und wie der Lichtleiter 38 und die erste Lichtquelle 52 in etwa in der Zeichenebene der Fig. 3 und 4 liegt. Diese zweite Lichtquelle 54 ist in Verlängerung der durch den Lichtleiter 38 vorgegebenen Richtung in einem deutlichen Abstand D von der ersten Lichtquelle 52 angeordnet, dessen Bedeutung im folgenden noch genauer erläutert wird

Jede der Lichtquellen 52, 54 ist auf einer Trägerplatine 56 bzw. 58 montiert, die gleichzeitig die nicht dargestellten Stromversorgungsanschlüsse zum Ansteuern dieser Lichtquellen in Form einer gedruckten Schaltung trägt.

Durch die Verbindungsleitung 60 zwischen den Trägerplatinen 56, 58 ist angedeutet, dass die Ansteuerung der ersten Lichtquellen 52 und der zweiten Lichtquellen 54 gleichzeitig erfolgt.

Dadurch, dass die Lichtquellen 52, 54 im Abstand D (siehe Fig. 3) voneinander angeordnet sind und sich in diesem Bereich, der nur durch die Verbindungsleitung 60 überbrückt werden muss, kein Lichtleiter befindet ist es möglich, das von der Lichtscheibe 36 und dem Reflektor 50 gebildete Leuchtengehäuse der erfindungsgemäßen Seitenblinkleuchte 34 in diesem Bereich mit einer besonders geringen Bautiefe auszustatten. Zu diesem Zweck ist in der Rückseite des Leuchtengehäuses eine Einsenkung 65 vorgesehen, in welche die senkrecht zum Schnitt der Fig. 3 und 4 verlaufenden Kante des Spiegelglases (nicht dargestellt) des Außenrückblickspiegels beim Verstellen eintauchen kann. Auf diese Weise läßt sich mit einer erfindungsgemäßen Seitenblinkleuchte eine Spiegel-Abdeckkappe gestalten, die insbesondere in dem vom Fahrzeug entfernt liegenden Endbereich besonders schlank ist, ohne dass Einschränkungen hinsichtlich des Verstellbereiches des Spiegelglases in Kauf genommen werden müssen.

Der Öffnungswinkel des von der zweiten Lichtquelle 54 abgestrahlten Lichtkegels wird durch eine mit der Lichtscheibe 36 einstückig verbundene, vorgesetzte Linsen- bzw. Streuscheibenanordnung 56 so verändert, dass im Bereich F-F die gewünschte Lichtverteilung erzielt wird.

In diesem Verbindungsbereich zwischen den Trägerplatinen 56 und 58 befindet sich auch die Zugangsöffnung 62 zum Inneren des Leuchtengehäuses, die durch ein die oben erwähnte Einsenkung 65 aufweisendes Deckelelement 68 verschließbar ist. Der die Rückwand des Leuchtengehäuses bildende Reflektor 50 umfasst gemäß der Erfindung im Bereich der vom Fahrzeug entfernt liegenden Stirnseite 44 des Lichtleiters 38 eine abgewinkelte, sich nach vorne zur Lichtscheibe 36 hin erstreckende Wand 70, die einerseits die Zugangsöffnung 62 begrenzt und andererseits eine durchgehende Öffnung 72 aufweist, durch die sich das Ende des Lichtleiters 38 hindurch so erstreck, dass die Stirnfläche des Lichtleiters 38 der Lichtquelle 56 unmittelbar gegenüber liegt.

An die Wand 70 schließt sich gemäß der Erfindung ein weiterer Teil des Reflektors 50 an, der auf seiner Vorderseite vorzugsweise ebenfalls mit einer Spiegelschicht bedampft ist und als Abdeckelement 74 dient und mit der Wand 70 einen solchen Winkel bildet, dass er sich in etwa parallel zur Lichtscheibe 36 erstreckt, wobei er die Lichtquellen 52,54, ihre Trägerplatinen 56,58 und die Verbindungsleitung 60 so verdeckt, dass sie in Blickrichtung der Figur 1 nicht sichtbar sind.

An ihrem vom Fahrzeug am weitesten entfernt liegenden Ende ist die Lichtscheibe 36 mit einem nach schräg hinten abgewinkelten Durchtrittsfenster 76 versehen, das auf seiner Innenseite eine optisch wirksame Struktur aufweist. Das von der zweiten Lichtquelle 54 abgegebene Licht wird mit Hilfe einer Reflektoranordnung, die von einem abgeschrägten Endteil 78 des zum Reflektor 50 gehörenden Abdeckelementes 74 und dem abgewinkelten auf der Innenseite mit einer Reflexionsschicht versehenen Ende 80 der Lichtscheibe 36 gebildet wird, auf das Durchtrittsfenster 76 gebündelt, dessen optisch wirksame Struktur, die von Linsen- und/oder Streuelementen gebildet sein kann, für die gewünschte Intensitätsverteilung des in den durch die Pfeile F, F bezeichneten Winkelbereich abgestrahlten Lichtes sorgt.

Wie bereits erwähnt, können in einer zur Zeichenebene der Figuren 3 und 4 senkrechten Richtung mehrere stabförmige Lichtleiter 38 übereinander angeordnet sein, wobei dann vorzugsweise jedem von ihnen eine erste Lichtquelle 52 und eine zweite Lichtquelle 54 zugeordnet ist.

Alle ersten Lichtquellen 52 sind dann vorzugsweise auf ein und derselben Trägerplatine 56 montiert und durch eine auf dieser vorgesehene gedruckte Schaltung elektrisch leitend miteinander verbunden. Gleiches gilt für die mehreren zweiten Lichtquelle 54 und die zugehörige Trägerplatine 58. Auch sind Anordnungen denkbar, bei denen eine einzige Trägerplatine so geformt ist, dass sie sowohl die ersten Lichtquellen 52 als auch die zweiten Lichtquellen 54 trägt. Die Verbindungsleitung 60 ist dann in Form einer gedruckten Schaltung auf dieser Trägerplatine ausgebildet.

Vorteilhaft an der beschriebenen Anordnung ist, dass sich der Lichtleiter 38 nicht mehr bis in den äußersten Endbereich der vom Fahrzeug entfernt liegenden Seite der Abdeckkappe 2 des Außenrückblickspiegels 1 erstrecken muß. In diesem Endbereich muß lediglich die wenigstens eine zweite Lichtquelle 54 angeordnet sein, um die gesetzlich vorgeschriebene Winkelbereichs-Ausleuchtung zu gewährleisten. Die Bautiefe einer solchen weiteren Lichtquelle ist aber wesentlich geringer als die eines Lichtleiters, der eine ausreichende Lichtintensität bis zu seinem äußersten Ende weitergibt. Gerade der vom Fahrzeug entfernt liegende Endbereich der Außenrückblickspiegel-Abdeckkappe 2 ist aber in dieser Hinsicht besonders kritisch, weil sich beim Verstellen des Rückblickspiegels in ihm die senkrechte Außenkante der Spiegelscheibe bewegen muß. Dadurch, dass die erfindungsgemäße Seitenblinkleuchte in diesem Bereich eine minimale Bautiefe aufweist, wird somit für die verstellbare Spiegelscheibe des Außenrückblickspiegels 1 ein vergrößerter Bewegungsbereich gewonnen, oder es kann umgekehrt bei gleichbleibendem Bewegungsbereich die Abdeckkappe 2 des Außenrückblickspiegels 1 erheblich schlanker ausgebildet werden. Dies stellt einen beträchtlichen Design-Vorteil dar.

Somit schafft die Erfindung eine Seitenblinkleuchte zum Einbau in den Außenrückblickspiegel eines Kraftfahrzeugs, die eine äußerst geringe Bautiefe besitzt, welche in dem Bereich, in welchem sich die Außenkante der verschwenktbaren Spiegelscheibe beim Verstellen bewegen muß, noch weiter vermindert ist. Darüber hinaus besteht eine besonders bevorzugte Ausführungsform der erfindungsgemäßen Seitenblinkleuchte aus nur sehr wenigen Bauteilen, nämlich der Lichtscheibe 36, die gleichzeitig die Vorderwand des Leuchtengehäuses bildet und mit dem Durchtrittsfenster 76 und dem Reflektorteil 80 einstückig verbunden ist, dem Reflektor 50, der als Rückwand des Leuchtengehäuses dient und mit der Reflektoranordnung 51, der das Ende des Lichtleiters 38 tragenden Wand 70, dem Abdeckteil 74 und dem Reflektorteil 78 einstückig verbunden ist, den Lichtleiter 36 sowie den die Lichtquellen 52 und 54 tragenden Trägerplatinen 56 und 58, der Verbindungsleitung 60 und dem Deckelelement 68 . Die in den Figuren nicht sichtbaren oberen und unteren Wände des Leuchtengehäuses können von abgewinkelten Teilen der Rückwand 50 und/oder der Lichtscheibe 36 gebildet werden.

## Patentansprüche

1. Seitenblinkleuchte (34) für den Einbau in die Abdeckkappe (2) eines Außenrückblickspiegels (1) für Kraftfahrzeuge mit
- einem in eine langgestreckte Lichtaustrittsöffnung (3) der Abdeckkappe (2) einbaubaren Leuchtengehäuse (36, 50, 68), das sich im eingebauten Zustand in etwa horizontal von der vom Fahrzeug entfernt liegenden Außenseite der Abdeckkappe (2) ausgehend zum Fahrzeug hin erstreckt,
- wenigstens einem Lichtleiter (38), der in etwa die gleiche Länge wie die Lichtaustrittsöffnung (3) besitzt und sich parallel zu dieser erstreckt, wobei hinter dem wenigstens einen Lichtleiter (38) ein Reflektor (50) angeordnet ist,
- wenigstens einer ersten Lichtquelle (52), die so angeordnet ist, dass ihr Licht durch die vom Fahrzeug entfernt liegende Stirnseite (46) des Lichtleiters (38) in diesen eingekoppelt und von ihm in Richtung seiner näher beim Fahrzeug liegenden Stirnseite (44) weiter geleitet wird, wobei über seine Länge verteilt Anteile des sich in ihm ausbreitenden Lichts quer zur Ausbreitungsrichtung so ausgekoppelt werden, dass sie durch die Lichtaustrittsöffnung (3) austreten, und
- wenigstens eine zweite Lichtquelle (54), die so angeordnet ist, dass sie ihr Licht in einer zur Fahrtrichtung im Wesentlichen quer und schräg nach hinten verlaufenden Richtung abstrahlt,
**dadurch gekennzeichnet, dass**
- dass der hinter dem wenigstens einen Lichtleiter (38) angeordnete Reflektor (50) im Bereich der vom Fahrzeug entfernt liegende Stirnseite (44) des Lichtleiters (38) eine abgewinkelte, sich nach vorn zur Lichtaustrittsöffnung (3) hin erstreckende Wand (70) umfaßt, in der eine Öffnung (72) ausgebildet ist, durch die sich das vom Fahrzeug entfernt liegende Ende des Lichtleiters (38) hindurch erstreckt und
- dass sich an die nach vorn abgewinkelte Wand (70) ein weiterer Teil des Reflektors (50) anschließt, der als Abdeckelement (74) dient und mit der Wand (70) einen solchen Winkel bildet, dass er sich in etwa parallel zur Lichtscheibe (36) erstreckt und dabei die Lichtquellen (52, 54) und ihre Trägerplatinen (56, 58) verdeckt.

2. Seitenblinkleuchte nach Anspruch 1, **dadurch gekennzeichnet, dass** die Lichtaustrittsöffnung (3) der Abdeckkappe (2) durch eine Lichtscheibe (36) der Seitenblinkleuchte (34) verschlossen ist.

3. Seitenblinkleuchte nach Anspruch 1 oder 2, **dadurch gekennzeichnet, dass** der wenigstens eine Lichtleiter (38) im Wesentlichen stabförmig ausgebildet ist.

4. Seitenblinkleuchte nach Anspruch 3, **dadurch gekennzeichnet, dass** mehrere stabförmige Lichtleiter im wesentlichen parallel zueinander so angeordnet sind, dass sie im eingebauten Zustand verikal übereinander liegen, und dass mehrere erste Lichtquellen vorgesehen sind, von denen jeweils eine einem der Lichtleite in der Weise zugeordnet ist, dass ihr Licht durch die vom Fahrzeug entfernt liegende Stirnseite des Lichtleiters in diesen eingekoppelt und von ihm in Richtung seiner näher beim Fahrzeug liegenden Stirnseite weiter geleitet wird.

5. Seitenblinkleuchte nach Anspruch 1 oder 2, **dadurch gekennzeichnet, dass** ein im wesentliche scheibenförmig ausgebildeter Lichtleiter vorgesehen ist.

6. Seitenblinkleuchte nach Anspruch 5, **dadurch gekennzeichnet, dass** entlang der vom Fahrzeug entfernt liegende Stirnseite des scheibenförmigen Lichtleiters mehrere erste Lichtquellen so angeordnet sind, dass ihr Licht durch diese Stirnseite in den Lichtleiter eingekoppelt und von diesem in Richtung seiner näher beim Fahrzeug liegenden Stirnseite weiter geleitet wird.

7. Seitenblinkleuchte nach Anspruch 4 oder 6, **dadurch gekennzeichnet, dass** mehreren der ersten Lichtquellen jeweils eine zweite Lichtquelle zugeordnet ist.

8. Seitenblinkleuchte nach einem der Ansprüche 1 bis 7, **dadurch gekennzeichnet, dass** die Lichtquellen (52, 54) von Leuchtdioden gebildet werden.

9. Seitenblinkleuchte nach Anspruch 8, **dadurch gekennzeichnet, dass** wenigstens zwei der Leuchtdioden auf einer gemeinsamen Trägerplatine (56, 58) montiert sind, auf der ihre Stromversorgungsanschlüsse verlaufen

10. Seitenblinkleuchte nach Anspruch 4 oder 6, **dadurch gekennzeichnet, dass** die mehreren ersten Lichtquellen von Dioden gebildet werden, die auf einer gemeinsamen Trägerplatine montiert sind, auf der ihre Stromversorgungsanschlüsse verlaufen.

11. Seitenblinkleuchte nach Anspruch 7, **dadurch gekennzeichnet, dass** die mehreren zweiten Lichtquellen von Dioden gebildet werden, die auf einer gemeinsamen Trägerplatine montiert sind, auf der ihre Stromversorgungsanschlüsse verlaufen.

12. Seitenblinkleuchte nach einem der vorhergehenden Ansprüche, **dadurch gekennzeichnet, dass** im Bereich der näher beim Fahrzeug liegenden Stirnseite (44) des wenigstens einen Lichtleiters (38) eine Reflektoranordnung (51) vorgesehen ist, die ankommendes Licht so reflektiert, dass es sich in dem Lichtleiter (38) entgegen der ursprünglichen Ausbreitungsrichtung ausbreitet.

13. Seitenblinkleuchte nach Anspruch 12, **dadurch gekennzeichnet, dass** der Reflektor (50) und die an der näher beim Fahrzeug liegenden Stirnseite( 44) des wenigstens einen Lichtleiters (38) vorgesehene Reflektoranordnung (51) miteinander einstückig ausgebildet sind.

14. Seitenblinkleuchte nach einem der vorhergehenden Ansprüche, **dadurch gekennzeichnet, dass** die Trägerplatinen (56, 58) der wenigstens einen ersten Lichtquelle (52) einerseits und der wenigstens einen zweiten Lichtquelle (54) andererseits in etwa in Längsrichtung der Lichtaustrittsöffnung (3) mit einem solchen Abstand (D) angeordnet sind, dass das Leuchtengehäuse (36, 50,68) in diesem Bereich quer zu seiner Längsrichtung eine kleinere Dicke als in den Bereichen aufweist, in denen der wenigstens eine Lichtleiter (38) und die wenigstens eine erste Lichtquelle (52) einerseits und die wenigstens eine zweite Lichtquelle (54) andererseits angeordnet sind.

15. Seitenblinkleuchte nach einem der vorhergehenden Ansprüche, **dadurch gekennzeichnet, dass** die die Lichtaustrittsöffnung (3) der Abdeckkappe (2) verschließende Lichtscheibe (36) gemeinsam mit dem Reflektor (50) und einem Deckelelement (68), das die Zugangsöffnung zu den ersten und zweiten Lichtquellen (52, 56) verschließt, das Leuchtengehäuse (36, 50, 68) der Seitenblinkleuchte (34) bildet.

16. Seitenblinkleuchte nach einem der vorhergehenden Ansprüche, **dadurch gekennzeichnet, dass** eine Reflektoranordnung (78, 80) vorgesehen ist, die das von der wenigstens einen zweiten Lichtquelle (54) abgegebene Licht zu einem Durchtrittsfenster (76) hin bündelt.

17. Seitenblinkleuchte nach Anspruch 16, **dadurch gekennzeichnet, dass** das Durchtittsfenster (76) eine optisch wirksame Struktur umfasst, die die liltensitätsverterteilung des von der wenigsten einen zweiten Lichtquelle (54) in der zur Fahrtrichtung im wesentlichen quer und schräg nach hinten verlaufenden Richtung abgestrahlten Lichtes beeinflusst

18. Seitenblinkleuchte nach Anspruch 16 oder 17, **dadurch gekennzeichnet, dass** das Durchtittsfenster (76) mit der Lichtscheibe (36) einstückig ausgebildet ist.

## Claims

1. A side flashing lamp (34) for fitting in the cover cap (2) of an external rear view mirror (1) for motor vehicles, comprising
- a lamp housing (36, 50, 68) which can be installed in an elongate light exit opening (3) of the cover cap (2) and which in the installed condition extends substantially horizontally towards the vehicle from the outward side of the cover cap (2), which is remote from the vehicle,
- at least one light guide (38) which is of substantially the same length as the light exit opening (3) and extends parallel thereto, wherein a reflector (50) is arranged behind the at least one light guide (38),
- at least one first light source (52) which is so arranged that its light is coupled into the light guide (38) through the end (46) thereof that is remote from the vehicle, and is further guided thereby in the direction of its end (44) that is closer to the vehicle, wherein distributed over its length portions of the light which is propagated therein are coupled out transversely with respect to the direction of propagation in such a way that they emerge through the light exit opening (3), and
- at least one second light source (54) which is so arranged that it radiates its light in a direction extending substantially transversely with respect to the direction of travel and inclinedly rearwardly,
**characterised in that**
- the reflector (50) arranged behind the at least one light guide (38) includes in the region of the end (44) of the light guide (38), that is remote from the vehicle, an angled wall (70) which extends forwardly towards the light exit opening (3) and in which there is an opening (72) through which extends the end of the light guide (38), that is remote from the vehicle, and
- adjoining the forwardly angled wall (70) is a further portion of the reflector (50), which serves as a cover element (74) and forms such an angle with the wall (70) that it extends substantially parallel to the light transmission cover (36) and in so doing masks the light sources (52, 54) and their support circuit boards (56, 58).

2. A side flashing lamp according to claim 1 **characterised in that** the light exit opening (3) of the cover cap (2) is closed by a light transmission cover (36) of the side flashing lamp (34).

3. A side flashing lamp according to claim 1 or claim 2 **characterised in that** the at least one light guide (38) is of a substantially bar-shaped configuration.

4. A side flashing lamp according to claim 3 **characterised in that** a plurality of bar-shaped light guides are arranged in substantially mutually parallel relationship in such a way that in the installed condition they are disposed vertically one above the other and that there are provided a plurality of first light sources, of which a respective one is associated with one of the light guides in such a way that its light is coupled into the light guide through the end thereof that is remote from the vehicle and is further passed thereby in the direction of its end that is closer to the vehicle.

5. A side flashing lamp according to claim 1 or claim 2 **characterised in that** there is provided a light guide which is of a substantially sheet-shaped configuration.

6. A side flashing lamp according to claim 5 **characterised in that** a plurality of first light sources are so arranged along the end of the sheet-shaped light guide that is remote from the vehicle that the light thereof is coupled into the light guide through said end and is further passed thereby in the direction of its end that is closer to the vehicle.

7. A side flashing lamp according to claim 4 or claim 6 **characterised in that** a respective second light source is associated with the plurality of the first light sources.

8. A side flashing lamp according to one of claims 1 to 7 **characterised in that** the light sources (52, 54) are formed by light emitting diodes.

9. A side flashing lamp according to claim 8 **characterised in that** at least two of the light emitting diodes are mounted on a common support circuit board (56, 58) on which their power supply connections extend.

10. A side flashing lamp according to claim 4 or claim 6 **characterised in that** the plurality of first light sources are formed by diodes which are mounted on a common support circuit board on which their power supply connections extend.

11. A side flashing lamp according to claim 7 **characterised in that** the plurality of second light sources are formed by diodes which are mounted on a common support circuit board on which their power supply connections extend.

12. A side flashing lamp according to one of the preceding claims **characterised in that** provided in the region of the end (44) of the at least one light guide (38), that is closer to the vehicle, is a reflector arrangement (51) which so reflects arriving light that it is propagated in the light guide (38) in opposite relationship to the original propagation direction.

13. A side flashing lamp according to claim 12 **characterised in that** the reflector (50) and the reflector arrangement (51) provided at the end (44) of the at least one light guide (38), that is closer to the vehicle, are formed integrally with each other.

14. A side flashing lamp according to one of the preceding claims **characterised in that** the support circuit boards (56, 58) of the at least one first light source (52) on the one hand and the at least one second light source (54) on the other hand are arranged substantially in the longitudinal direction of the light exit opening (3) at such a spacing (D) that the lamp housing (36, 50, 68) is of a smaller thickness transversely with respect to its longitudinal direction **in that** region than in the regions in which the at least one light guide (38) and the at least one first light source (52) on the one hand and the at least one second light source (54) on the other hand are arranged.

15. A side flashing lamp according to one of the preceding claims **characterised in that** the light transmission cover (36) which closes the light exit opening (3) of the cover cap (2), jointly with the reflector (50) and a cover element (68) which closes the access opening to the first and second light sources (52, 56), forms the lamp housing (36, 50, 68) of the side flashing lamp (34).

16. A side flashing lamp according to one of the preceding claims **characterised in that** there is provided a reflector arrangement (78, 80) which focuses the light emitted by the at least one second light source (54) towards a transmission window (76).

17. A side flashing lamp according to claim 16 **characterised in that** the transmission window (76) includes an optically effective structure which influences the distribution of intensity of the light radiated by the at least one second light source (54) in the direction extending substantially transversely with respect to the direction of travel and inclinedly rearwardly.

18. A side flashing lamp according to claim 16 or claim 17 **characterised in that** the transmission window (76) is formed integrally with the light transmission cover (36).

## Revendications

1. Feu latéral clignotant (34) destiné à être monté dans le cache (2) d'un rétroviseur latéral (1) pour véhicules automobiles, comportant
- un boîtier (36, 50, 68) de feu clignotant, qui est destiné à être monté dans une ouverture de sortie de lumière (3) allongée du cache (2) et qui, à l'état monté, s'étend sensiblement horizontalement vers le véhicule en partant du côté extérieur du cache (2), éloigné du véhicule,
- au moins un guide de lumière (38) qui a sensiblement la même longueur que l'ouverture de sortie de lumière (3) et qui s'étend parallèlement à cette dernière, un réflecteur (50) étant agencé derrière ledit au moins un guide de lumière (38),
- au moins une première source lumineuse (52), qui est agencée de telle sorte que sa lumière est injectée à travers la face frontale (46), éloignée du véhicule, du guide de lumière (38) dans celui-ci et est guidée par celui-ci vers sa face frontale (44) située plus près du véhicule, des parts de la lumière se propageant dans ledit guide de lumière et réparties sur la longueur de celui-ci sont émises transversalement à la direction de propagation, de telle sorte qu'elles sortent à travers l'ouverture de sortie de lumière (3), et
- au moins une deuxième source lumineuse (54) qui est agencée de telle sorte qu'elle émet sa lumière dans une direction sensiblement transversale et en oblique vers l'arrière par rapport à la direction de déplacement du véhicule,
**caractérisé**
- **en ce que** le réflecteur (50), agencé derrière ledit au moins un guide de lumière (38), comporte, dans la zone de la face frontale (44) du guide de lumière (38), éloignée du véhicule, une paroi (70) coudée, qui s'étend vers l'avant vers l'ouverture de sortie de lumière (3) et dans laquelle est ménagée une ouverture (72) à travers laquelle passe l'extrémité, éloignée du véhicule, du guide de lumière (38), et
- **en ce que** la paroi (70) coudée vers l'avant est prolongée par une autre partie du réflecteur (50), laquelle est utilisée comme élément de recouvrement (74) et forme avec la paroi (70) un angle tel qu'elle s'étend sensiblement parallèlement au disque lumineux (36) et masque dans ce cas les sources lumineuses (52, 54) et leurs platines de support (56, 58).

2. Feu latéral clignotant selon la revendication 1, **caractérisé en ce que** l'ouverture de sortie de lumière (3) du cache (2) est fermée par un disque lumineux (36) du feu latéral clignotant (34).

3. Feu latéral clignotant selon la revendication 1 ou 2, **caractérisé en ce que** ledit au moins un guide de lumière (38) est réalisé sensiblement en forme de barre.

4. Feu latéral clignotant selon la revendication 3, **caractérisé en ce que** plusieurs guides de lumière en forme de barre sont agencés sensiblement parallèlement entre eux, de telle sorte que, à l'état monté, ils se superposent verticalement, et **en ce qu'**il est prévu plusieurs premières sources lumineuses, parmi lesquelles chacune est associée à un des guides de lumière de telle sorte que leur lumière est injectée à travers la face frontale, éloignée du véhicule, du guide de lumière dans celui-ci et est guidée par celui-ci vers sa face frontale située plus près du véhicule.

5. Feu latéral clignotant selon la revendication 1 ou 2, **caractérisé en ce qu'**il est prévu un guide de lumière réalisé sensiblement en forme de disque.

6. Feu latéral clignotant selon la revendication 5, **caractérisé en ce que** le long de la face frontale, éloignée du véhicule, du guide de lumière en forme de disque, sont agencées plusieurs premières sources lumineuses de telle sorte que leur lumière est injectée à travers cette face frontale dans le guide de lumière et est guidée par celui-ci vers sa face frontale située plus près du véhicule.

7. Feu latéral clignotant selon la revendication 4 ou 6, **caractérisé en ce que** respectivement une deuxième source lumineuse est associée à plusieurs des premières sources lumineuses.

8. Feu latéral clignotant selon l'une quelconque des revendications 1 à 7, **caractérisé en ce que** les sources lumineuses (52, 54) sont formées par des diodes électroluminescentes.

9. Feu latéral clignotant selon la revendication 8, **caractérisé en ce qu'**au moins deux des diodes électroluminescentes sont montées sur une platine de support (56, 58) commune, sur laquelle s'étendent les raccords d'alimentation en courant.

10. Feu latéral clignotant selon la revendication 4 ou 6, **caractérisé en ce que** la pluralité de premières sources lumineuses sont formées par des diodes, qui sont montées sur une platine de support commune, sur laquelle s'étendent les raccords d'alimentation en courant.

11. Feu latéral clignotant selon la revendication 7, **caractérisé en ce que** la pluralité de deuxièmes sources lumineuses sont formées par des diodes, qui sont montées sur une platine de support commune, sur laquelle s'étendent les raccords d'alimentation en courant.

12. Feu latéral clignotant selon l'une quelconque des revendications précédentes, **caractérisé en ce que** dans la zone de la face frontale (44), située plus près du véhicule, dudit au moins un guide de lumière (38), il est prévu un système de réflecteur (51), qui réfléchit la lumière reçue de telle sorte qu'elle se propage dans le guide de lumière (38) dans le sens opposé à la direction de propagation initiale.

13. Feu latéral clignotant selon la revendication 12, **caractérisé en ce que** le réflecteur (50) et le système de réflecteur (51), prévu sur la face frontale (44), située plus près du véhicule, dudit au moins un guide de lumière (38), sont réalisés d'un seul tenant l'un avec l'autre.

14. Feu latéral clignotant selon l'une quelconque des revendications précédentes, **caractérisé en ce que** les platines de support (56, 58) de ladite au moins une première source lumineuse (52), d'une part, et de ladite au moins une deuxième source lumineuse (54), d'autre part, sont agencées sensiblement dans le sens longitudinal de l'ouverture de sortie de lumière (3) avec une distance (D) telle que le boîtier (36, 50, 68) du feu clignotant a dans cette zone transversalement à son sens longitudinal une plus petite épaisseur que dans les zones dans lesquelles sont agencées ledit au moins un guide de lumière (38) et ladite au moins une première source lumineuse (52), d'une part, et ladite au moins une deuxième source lumineuse (54), d'autre part.

15. Feu latéral clignotant selon l'une quelconque des revendications précédentes, **caractérisé en ce que** le disque lumineux (36), fermant l'ouverture de sortie de lumière (3) du cache (2), conjointement avec le réflecteur (50) et un élément de couvercle (68), qui ferme l'ouverture d'accès vers les première et les deuxième sources lumineuses (52, 54), forme le boîtier (36, 50, 68) du feu latéral clignotant (34).

16. Feu latéral clignotant selon l'une quelconque des revendications précédentes, **caractérisé en ce qu'**il est prévu un système de réflecteur (78, 80), par lequel la lumière émise par ladite au moins une deuxième source lumineuse (54) est focalisée vers une fenêtre de passage (76).

17. Feu latéral clignotant selon la revendication 16, **caractérisé en ce que** la fenêtre de passage (76) comporte une structure optiquement active, qui influence la répartition de l'intensité de la lumière émise par ladite au moins une deuxième source lumineuse (54) dans la direction sensiblement transversale et en oblique vers l'arrière par rapport à la direction de déplacement du véhicule.

18. Feu latéral clignotant selon la revendication 16 ou 17, **caractérisé en ce que** la fenêtre de passage (76) est réalisée d'un seul tenant avec le disque lumineux (36).
